# EUROPÄISCHE PATENTSCHRIFT

(11) **EP 0 803 622 B1**
(45) Veröffentlichungstag und Bekanntmachung des Hinweises auf die Patenterteilung: **04.09.2002**
(21) Anmeldenummer: 97105727.8
(22) Anmeldetag: 07.04.1997
(51) Int. Cl.: E04H 12/02

(54) **GFK-Mast**
GFP-mast
Mât en matière plastique renforcée de fibres de verre

(30) Priorität: 23.04.1996 DE 19616144
(43) Veröffentlichungstag der Anmeldung: 29.10.1997
(73) Patentinhaber: Pfleiderer Infrastrukturtechnik GmbH & Co. KG, 92318 Neumarkt (DE)
(72) Erfinder: Lieb, Helmut, 92318 Neumarkt (DE); Rödle, Markus, 92318 Neumarkt (DE); Simson, Georg, 92348 Berg (DE)
(74) Vertreter: Matschkur, Lindner Blaumeier Patent- und Rechtsanwälte

(56) Entgegenhaltungen:
- EP-A- 0 053 534
- DE-A- 1 936 903
- DE-U- 9 215 057
- FR-A- 2 129 268

## Beschreibung

Die Erfindung bezieht sich auf einen GFK-Mast (glasfaserverstärkter Kunststoffmast) in Form mehrerer beabstandeter, gegeneinander verstrebter GFK-Rohre, wie aus der DE-A-1 936 903 bekannt.

Neben den häufig im Schleuderverfahren gefertigten konischen Mastkonstruktionen sind in jüngster Zeit, beispielsweise als Antennenmasten, auch bereits Konstruktionen ähnlich wie die bekannten Metallgittermaste bekannt geworden, bei denen vier GFK-Rohre, die die Kanten eines geraden Prismas bilden, durch Verstrebungen miteinander verbunden sind. Derartige verstrebte GFK-Rohre sind billiger in der Fertigung und weisen eine geringere Windangriffsfläche auf, was es nochmals ermöglicht, die Kosten zu reduzieren, indem sie schlanker und aus dünneren Rohren aufgebaut werden. Unabhängig von der Art der Verstrebung sind derartige Maste aus verstrebten GFK-Rohren aber relativ anfällig gegen Verdrehung und auch die Auslenkung in Antennen ist bislang noch nicht zufriedenstellend gelöst.

Aus der FR-A-2 129 268 sind, wie bei vorbekannten Ausführungen von GFK-Rohr- Masten, die Metallrohre nach Art eines Metallgittermastes angeordnet und durch Verstrebungen miteinander verbunden. Mit den Seilverstrebungen wird der angestrebte Aufbau erreicht. Die Rohre bestehen aus Metall, und können mit einer Verschweißung mit der unteren horizontalen Platte verbunden werden. An jeder Stoßstelle zweier übereinander angeordneter Rohrabschnitte sind bei der FR-A- 2 129 268 zwei Platten, nämlich einmal die Platte, die die unteren Abschnitte umgibt und einmal die Platte, die die oberen, darüber gesetzten Abschnitte umgibt, angeordnet, wobei die Art der Verbindung der ineinander gesteckten Endabschnitte der unteren Rohrabschnitte mit einer Verjüngung am oberen Ende und den darauf gesteckten Enden der darüber angeordneten Rohrabschnitte miteinander und mit den Platten nicht beschrieben ist. Möglicherweise soll hier ebenfalls eine Verschweißung erfolgen. Die Verbindung ist aber äußerst kompliziert aufgebaut und trotz der Verstrebungen ergibt sich kein Aufbau, der - insbesondere wenn man statt der Metallrohre GFK-Rohre verwenden wollte - einen verdrehsicheren GFK-Mast ergibt.

Der Erfindung liegt daher die Aufgabe zugrunde, einen GFK-Mast der eingangs genannten Art so auszugestalten, dass er sowohl was die Auslenkung als auch die Verdrehung anbelangt, verbesserte Festigkeitseigenschaften bei möglichst gleichbleibender oder vereinfachter Fertigung aufweist.

Zur Lösung dieser Aufgabe ist erfindungsgemäß vorgesehen, dass drei ein gleichseitiges Prisma aufspannende Rohre durch in der Höhe beabstandete Horizontalverbundplatten miteinander verbunden sind und dass die Horizontalverbundplatten aus faserverstärktem Kunststoff oder bevorzugt aus witterungsbeständigem Brettschichtholz bestehen, dass die Rohre aus einzelnen Rohrabschnitten bestehen, in die an beiden Enden ein Metallrohr eingeklebt ist, an dem jeweils ein Metallflansch angeschweißt ist, dass zwei übereinander angeordnete Rohrabschnitte mit ihren korrespondierenden Metallflanschen auf den gegenüberliegenden Oberflächen einer Horizontalverbundplatte angeordnet sind und dass die korrespondierenden Metallflansche unter Zwischenordnung der betreffenden Horizontalverbundplatte durch Schrauben miteinander verbunden sind.

Überraschenderweise hat es sich gezeigt, dass durch drei oder vier solcher Horizontalverbundplatten, bezogen auf einen 3-Rohr-GFK-Mast von 16 m Höhe, sowohl eine geringere Auslenkung als auch eine geringere Verdrehung in Antennenhöhe ergeben als vielfach verstrebte Vierrohrmaste (man vergleiche beispielsweise die DE-A-1936903), wobei durch den Wegfall eines Rohres bei der bevorzugten erfindungsgemäßen Dreiecksprismenkonstruktion der Aufbau noch zusätzlich stark vereinfacht wird.

Das erfindungsgemäß bevorzugt verwendete, gegebenenfalls noch dazu durch eine Kunststoffumhüllung versiegelte Brettschichtholz lässt sich äußerst witterungsbeständig fertigen und gibt bei geringem Gewicht hervorragende Festigkeitswerte, wobei die einer solchen Holzplatte immanente Elastizität für den Mastaufbau zusätzliche günstige Ergebnisse mit sich bringt.

Durch die erfindungsgemäße Ausgestaltung der Rohre aus einzelnen Rohrabschnitten, deren Längen dem vertikalen Abstand benachbarter Flansche entsprechen, wird die Herstellung der GFK-Rohre stark vereinfacht gegenüber Konstruktionen, bei denen die GFK-Rohre durchgehende Längen von 16 und mehr Metern aufweisen müssen. Dabei wird die Verschraubung der Rohrabschnitte durch die erfindungsgemäße Zwischenordnung jeweils der Horizontalverbundplatten erheblich vereinfacht und es bedarf keiner gesonderten Halterungen. Die Horizontalverbundplatten müssen ja sowieso irgendwie mit den GFK-Rohren verbunden werden und bei einteiliger Ausbildung erfordert dies ebenfalls die Anformung oder die Befestigung von Flanschringen od. dgl. Bei der geteilten Ausbildung der GFK-Rohre wird diese Verbindung der GFK-Rohre mit den Horizontalverbundplatten in sehr eleganter Weise gemeinsam mit der Verbindung der Rohrabschnitte gelöst.

Durch die Ausbildung der Horizontalverbundplatten aus faserverstärktem Kunststoff oder aus dem bevorzugten witterungsbeständigen Brettschichtholz sollen dabei in weiterer Ausgestaltung der Erfindung die Verbindungsbolzen der Flansche Stehhülsen in den Horizontalverbundplatten durchsetzen, deren Länge etwas kleiner ist als die Dicke der Horizontalverbundplatten. Auf diese Art und Weise wird durch die Biegebeanspruchung und die daraus resultierende Verkantung benachbarter Rohrabschnitte die Gefahr eines Einschneidens der Flansche in die Holz- oder Kunststoffoberfläche vermieden. Schließlich liegt es auch noch im Rahmen der Erfindung, daß die Horizontalverbundplatten in den Ecken gerundete Dreiecke mit eingebogenen Seitenkanten sind.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine perspektivische Ansicht eines erfindungsgemäßen GFK-Masts, und
- Fig. 2: einen vergrößerten Schnitt durch ein GFK-Rohr im Bereich der Stoßkante zweier Rohrabschnitte und der dort befestigen Horizontalverbundplatte.

Der dargestellte GFK-Mast besteht aus drei GFK-Rohren 1', 1" und 1'", die jeweils aus einzelnen Rohrabschnitten aufgebaut sind, die jeweils dem Abstand zweier übereinanderliegender, die drei Rohre 1', 1" und 1'" miteinander verbindender Horizontalverbundplatten 2 entsprechen. Die drei GFK-Rohre 1', 1" und 1'" bilden dabei die Eckkanten eines gleichseitigen Prismas, wobei zur Verstrebung eines derartigen Mastes mit einer Gesamthöhe von 16 m drei oder vorzugsweise, wie dargestellt, vier Horizontalverbundplatten ausreichen. Diese sind vom Boden her gesehen in 3 m, 6 m, 9 m und 14 m Höhe angeordnet. Bei einem Außendurchmesser der GFK-Rohre 1', 1" und 1'" von ca. 170 mm betragen im dargestellten Ausführungsbeispiel die Abstände der Rohre voneinander etwa 1,5 m.

Die einzelnen Abschnitte der Rohre 1', 1" und 1'" bestehen aus einem Kunststoffrohr, in das jeweils endseitig ein vorzugsweise als Edelstahlrohr ausgebildetes Metallrohr 3 eingeklebt ist, an dem jeweils ein Metallflansch 4 angeschweißt ist. Die Metallflansche 4 sind unter Zwischenordnung jeweils einer Horizontalverbundplatte 2 durch Schrauben 5 miteinander verbunden, wobei die Schrauben Stehhülsen 6 durchsetzen, deren Länge geringfügig kleiner ist als die Dicke der Platten 2. Im dargestellten Ausführungsbeispiel bestehen die Horizontalverbundplatten aus witterungsbeständigem Brettschichtholz, das mehrfach verleimt und mit einer Kunststoffbeschichtung versehen ist. Die Metall-Verankerungsrohre 3, die anstelle aus Edelstahl auch aus verzinktem Stahl bestehen könnten, sind über eine Klebefuge durch Spezialkleber mit den Kunststoffrohren 1', 1" und 1'" verbunden.

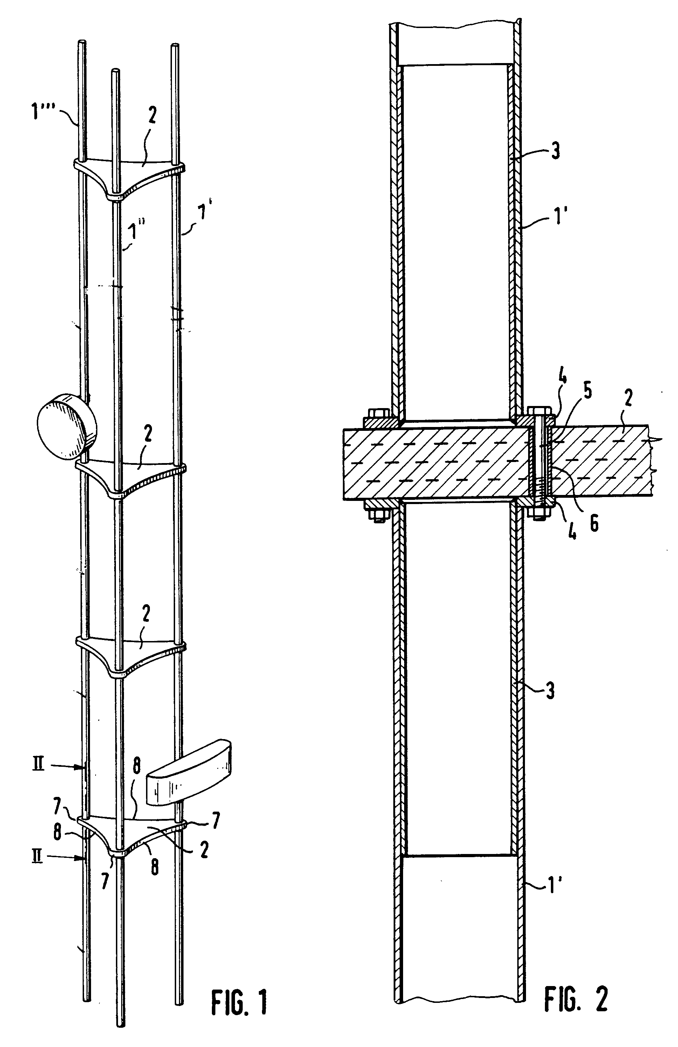

Wie man aus Fig. 1 erkennen kann, sind die Horizontalverbundpaltten Dreiecksplatten mit gerundeten Ecken 7, deren Seitenkanten 8 eingebogen sind. Dadurch ergibt sich eine Materialeinsparung und damit ein geringeres Gewicht der Horizontalverbundplatten.

Die Erfindung ist nicht auf das dargestellte Ausführungsbeispiel beschränkt. So wäre es grundsätzlich auch möglich, einen Vierrohrmast mit Hilfe der erfindungsgemäßen Horizontalverbundplatten aufzubauen, obgleich die Stabilität und insbesondere die Verdrehfestigkeit gerade der Dreirohrausführung besonders günstig ist. Darüber hinaus könnten - wie bereits ausgeführt - auch bei der gleichen genannten Höhe von 16 m weniger als drei oder auch mehr als vier Horizontalverbundplatten verwendet werden, wobei selbstverständlich die angegebene 16 m-Höhe lediglich ein Ausführungsbeispiel darstellt. Prinzipiell lassen sich alle gängigen GFK-Masthöhen in der erfindungsgemäßen Konstruktion ausführen. Schließlich wäre es - obgleich im allgemeinen die Horizontalverbundplatten alleine ausreichen - in Spezialfällen und bei sehr großen Höhen zweckmäßig, die Rohre 1', 1" und 1'" zwischen den Horizontalverbundplatten durch diagonale Verstrebungen aus GFK-Rohren miteinander zu verbinden.

## Patentansprüche

1. GFK-Mast in Form mehrerer beabstandeter, gegeneinander verstrebter und parallel zueinander angeordneter GFK-Rohre, **dadurch gekennzeichnet, dass** drei ein gleichseitiges Prisma aufspannende Rohre (1,1",1"') durch in der Höhe beabstandete Horizontalverbundplatten (2) miteinander verbunden sind und dass die Horizontalverbundplatten (2) aus faserverstärktem Kunststoff oder bevorzugt aus witterungsbeständigem Brettschichtholz bestehen, dass die Rohre (1',1"1"') aus einzelnen Rohrabschnitten bestehen, in die an beiden Enden der Rohrabschnitte ein Metallrohr (3) eingeklebt ist, an dem jeweils ein Metallflansch (4) angeschweißt ist, dass zwei übereinander angeordnete Rohrabschnitte mit ihren korrespondierenden Metallflanschen (4) auf den gegenüberliegenden Oberflächen einer Horizontalverbundplatte (2) angeordnet sind und dass die korrespondierenden Metallflansche (4) unter Zwischenordnung der betreffenden Horizontalverbundplatte (2) durch Schrauben (5) miteinander verbunden sind.

2. GFK-Mast nach Anspruch 1, **dadurch gekennzeichnet, dass** die Verbindungsschrauben (5) der Flansche (4) Stehhülsen (6) in den Horizontalverbundplatten (2) durchsetzen.

3. GFK-Mast nach einem der Ansprüche 1 oder 2, **dadurch gekennzeichnet, dass** die Horizontalverbundplatten in den Ecken (7) gerundete Dreiecke mit eingebogenen Seitenkanten (8) sind.

## Claims

1. GFP mast in the form of a plurality of spaced GFP tubes braced together and disposed parallel to one another, **characterised in that** three tubes (1, 1", 1'") making up an equilateral prism are connected together by horizontal, vertically spaced compound plates (2), and **in that** the horizontal compound plates (2) are made of fibre-reinforced plastics material or preferably of weather-resistant laminated wood, **in that** the tubes (1, 1", 1"') consist of individual tube lengths into which at both ends a metal tube (3) is adhered, to each of which a metal flange (4) is welded, **in that** two opposing tube lengths with their corresponding metal flanges (4) are disposed on the opposing surfaces of a horizontal composite plate (2), and **in that** the corresponding metal flanges (4) with the respective horizontal compound plate (2) interposed are connected together with screws (5).

2. GFP mast according to claim 1, **characterised in that** the connecting screws (5) of the flanges (4) penetrate upright bushes (6) in the horizontal compound plates (2).

3. GFP mast according to either of claims 1 or 2, **characterised in that** the horizontal compound plates are triangles with rounded corners (7) and concave side edges (8).

## Revendications

1. Mât en matière plastique renforcée de fibres de verre, se présentant sous la forme de plusieurs tubes en matière plastique renforcée de fibres de verre mutuellement espacés, disposés parallèlement les uns par rapport aux autres et entretoisés réciproquement, **caractérisé en ce que** trois tubes (1', 1", 1"') placés de manière à définir un prisme équilatéral, sont reliés mutuellement par des plaques de liaison horizontales (2) espacées en hauteur, et **en ce que** les plaques de liaison horizontales (2) sont réalisées en matière plastique renforcée de fibres ou de préférence en lamelles de bois collées laminées résistant aux intempéries, **en ce que** les tubes (1', 1", 1''') sont constitués de tronçons de tube individuels dans lesquels est collé, à chacune des deux extrémités des tronçons de tube, un tube métallique (3) à chacun desquels est soudé une bride métallique (4), **en ce que** deux tronçons de tube disposés l'un au-dessus de l'autre sont placés, avec leurs brides métalliques (4) correspondantes, sur les surfaces opposées d'une plaque de liaison horizontale (2), et **en ce que** les brides métalliques (4) correspondantes sont assemblées l'une à l'autre par des vis (5) avec la plaque de liaison horizontale (2) associée intercalée entre elles.

2. Mât en matière plastique renforcée de fibres de verre selon la revendication 1, **caractérisé en ce que** les vis d'assemblage (5) des brides (4) traversent des douilles entretoises (6) dans les plaques de liaison horizontales (2).

3. Mât en matière plastique renforcée de fibres de verre selon l'une des revendications 1 ou 2, **caractérisé en ce que** les plaques de liaison horizontales (2) sont des triangles arrondis au niveau des sommets (7) et présentant des bords ou côtés latéraux (8) incurvés en creux.
